(19) Europäisches Patentamt

European Patent Office

Office européen des brevets

(11) Publication number: **0 254 490 B1**

(12) **EUROPEAN PATENT SPECIFICATION**

(45) Date of publication of patent specification :
17.07.91 Bulletin 91/29

(51) Int. Cl.$^5$: **B26B 21/44**

(21) Application number: **87306320.0**

(22) Date of filing: **17.07.87**

(54) Cap for a razor blade assembly.

(30) Priority: **21.07.86 US 887305**

(43) Date of publication of application:
**27.01.88 Bulletin 88/04**

(45) Publication of the grant of the patent:
**17.07.91 Bulletin 91/29**

(84) Designated Contracting States:
**AT BE CH DE ES FR GB GR IT LI LU NL SE**

(56) References cited:
**EP-A- 0 184 440**
**GB-A- 2 009 017**
**GB-A- 2 024 082**

(73) Proprietor: **WARNER-LAMBERT COMPANY**
**201 Tabor Road**
**Morris Plains New Jersey 07950 (US)**

(72) Inventor: **Ferraro, Frank A.**
**104 Garwood Road**
**Trumbull Connecticut 06611 (US)**

(74) Representative: **Coxon, Philip et al**
**Eric Potter & Clarkson St. Mary's Court St.**
**Mary's Gate**
**Nottingham NG1 1LE (GB)**

Jouve, 18, rue Saint-Denis, 75001 PARIS

## Description

This invention relates to a razor blade assembly and particularly to a cap for a blade assembly in which a shaving blade has been attached.

US-A-4,170,821 issued to Booth on October 16, 1979, discloses a solid water soluble shaving aid incorporated as a strip attached to a disposable razor blade cartridge. Cartridges having such shaving aids attached to the cap are currently marketed with the aid being mixed in polystyrene. Currently, polyethylene oxide is the shaving aid preferred.

Cartridges as used herein are blade assemblies sold as individual items for attachment to a separate handle. Blade assembly is used generically to include both cartridges, and to include that part of unitary disposable razors other than the handle. The blade assembly may include at least one blade, a seat for the blade, a guard bar extending from the seat, a cap, means for separating the blades (if more than one blade is used); and means for maintaining blade position.

While location of the lubricating strip on the cap has proven to be desirable because of the liberation of lubricant with each razor stroke, the attachment of the plastic strip in which the polyethylene oxide lubricant has been impregnated, has proven to be difficult. The known cartridges have the lubricating strip adhesively secured to the cap of the blade assembly. Adhesive securement requires the separate steps during the manufacturing process of contacting the cap with adhesive, precisely locating the lubricating strip to be in registry with the adhesive and, finally, clamping the strip to ensure proper adhesive bonding. Not only do these additional steps dramatically slow the process but the cost of the adhesive and the problems associated in working with a necessarily quick-drying plastic bonding adhesive with a volatile organic solvent add unnecessary time and complexity to what is otherwise an ultra high speed manufacturing process.

EP-A-232 135, also to Warner Lambert Company describes a razor head comprising a shaving aid receiving formation in a face-engaging surface of the head, said shaving aid receiving formation being defined by a deformable back projection disposed substantially parallel to a back edge of the head and a deformable front projection substantially parallel to a front edge of the head and to the back projection. The front and back projections are deformable between a first position in which they do not retain a shaving aid in said formation and a second position in which they do retain the shaving aid. EP-A-232 135 was published later than the filing date of the present invention and is falling under Art. 54 (3) EPC.

It is an object of this invention to provide a razor blade assembly and particularly a cap for a razor blade assembly which is adapted to receive and clamp a shaving aid strip without the use of adhesive.

According to one aspect of the present invention, there is provided a cap (10) for a razor blade assembly (B) comprising a face-engaging surface having front and back edges (13, 11) and having a shaving aid receiving formation on said surface, wherein said shaving aid receiving formation is defined by a deformable back projection (16) disposed substantially parallel to said back edge (11), and a deformable front projection which is formed of a plurality of tabs (12a, 12b, 12c) and which is disposed substantially parallel to the front edge (13) and to the back projection (16), between the front edge (13) and the back projection (16), wherein the front and back projections (12a, 12b, 12c, 16) bend inward toward each other and overlay and inset a shaving aid (20) positioned between the base of said projections, and a boss (14a, 14b) extends upward along the sides (15a, 15b) of the cap (10) substantially normal to the projections to retain the shaving aid (20) from laterally shifting.

According to another aspect of the invention there is provided a razor blade assembly (B) comprising at least one shaving blade (18, 19), a blade seat, a guard bar (22) extending outward from said seat beyond the or each blade (18, 19) a cap (10) attached to at least said one blade (18, 19) and said seat in a manner which prevent moving the blade (18, 19) from a desired position, wherein said cap (10) comprises a face-engaging surface having front and back edges (13, 11), and having a shaving aid receiving formation on said surface, and wherein said shaving aid receiving formation is defined by a deformable back projection (16) disposed substantially parallel to said back edge (11) and a front deformable projection (12) disposed substantially parallel to the front edge (13) and to the back projection (16), between the front edge (13) and the back projection (16), wherein the front and back projections (12, 16) bend inward towards each other and overlay and inset a shaving aid (20) positioned between the base of said projections (12, 16) and wherein a leg (15c, 15d) extends toward said guard bar (22) at each end of said cap (10).

Thus the cap according to the invention is provided with deformable positioning means for positioning the shaving aid.

Preferred embodiments of the invention are defined in the dependent claims.

A shaving aid, for example in the form of a lubricating strip, can be positioned in the shaving aid receiving formation. After positioning the back projection can be deformed over the shaving aid to maintain it in the shaving aid receiving formation.

The front projection may also be deformed over the shaving aid to maintain it in the shaving aid receiving formation.

To assist with maintaining the aid after deformation the front projection and/or back projection may be plastic.

Reference is made to the accompanying drawings, in which :

Figure 1 is a plan view of a razor blade assembly including a cap according to the invention ;

Figure 2 is a cross sectional view taken along the lines 2-2 of Figure 1 ;

Figure 3 is an end perspective view of a second embodiment of the invention ; and

Figure 4 is a cross section taken along the lines 4-4 of Figure 3.

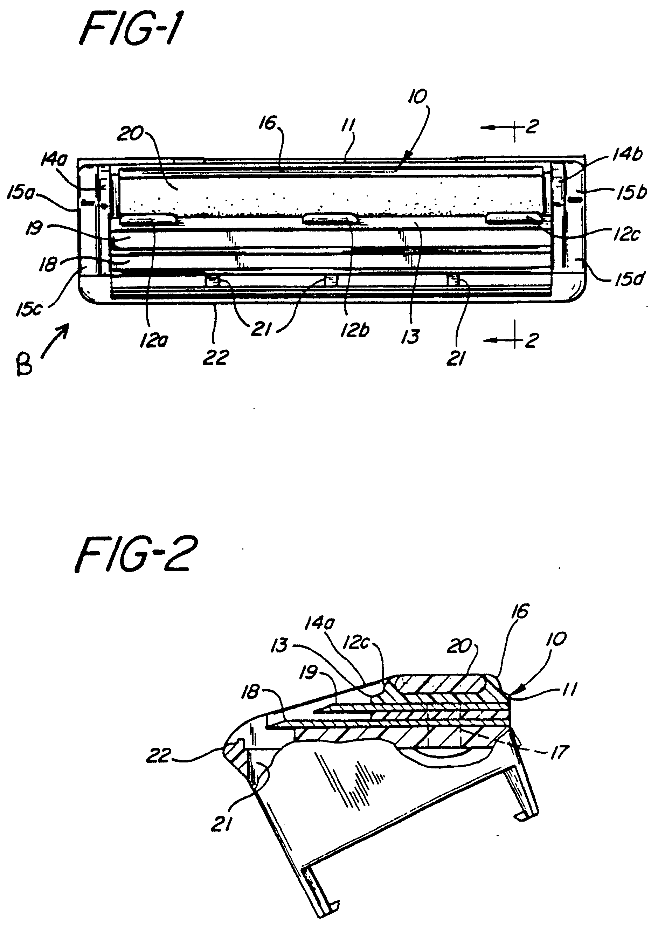

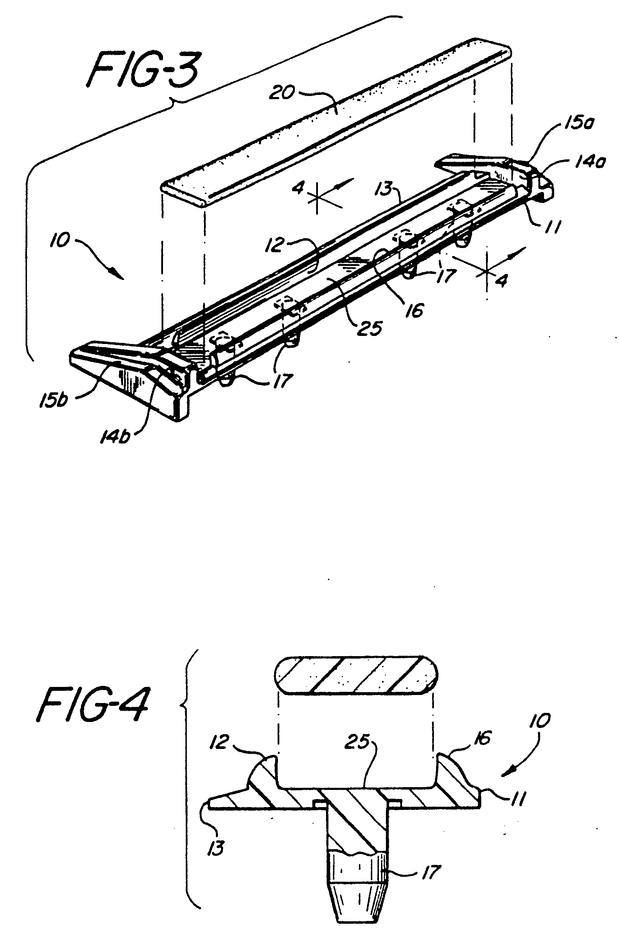

As shown in Figures 1 and 4 a razor cap 10 of a blade assembly B has a back 11, defining a back edge, and a front 13, defining a front edge, and sides 15a and 15b.

As shown in Figure 1 a shaving aid in the form of a lubricating strip 20 is partially overlaid by a back projection 16 which extends along the entire length of the rear portion of the strip 20. The lubricating strip 20 is also held in place at the front portion 13 of the razor cap by a front projection in the form of a series of tabs 12a, 12b and 12c positioned as shown in Figure 1.

Bosses 14a and 14b positioned inward along the sides 15a and 15b respectively prevent lubricating strip 20 from shifting laterally either during insertion or use. The back projection 16, the tabs 12a, 12b and 12c, and the bosses 14a and 14b define a shaving aid receiving formation in which the lubricating strip 20 is disposed.

Tapering downward from the front 13 of the cap 10 and extending from sides 15a and 15b respectively are legs 15c and 15d. Positioned between the legs 15c and 15d adjacent and partially underlying the front portion 13 of the cap 10 is a top or cap blade 19 and a bottom or seat blade 18, with the bottom blade 18 extending outward farther than the cap blade 19.

Ribs 21 extend toward guard bar 22 and extend outwardly beneath the blades 18 and 19 as projections below, and as part of, a blade seat (not otherwise shown). The ribs 21 extend parallel to the legs 15c and 15d and join guard bar 22 which is designed to protect the face of the shaver during the shaving operation itself.

The configuration of the front projection, i.e., the three tabs 12a, 12b and 12c illustrated in Figure 1, is a currently preferred clamping configuration for providing secure multi-position clamping along the front portion 13 of the cap 10 with maximum exposure of the lubricating strip 20. It is also possible to use this multi-tab configuration for the rear projection 16 but, due to the nature of the forces exerted during shaving, multiple tabs are not as important in the rear portion of the cap 10.

The blade assembly B depicted in Figure 1 is held in place by staking means in the form of stakes 17, shown in Figure 2 ; the spacing of the staking means 17 can be seen in Figure 2 and Figure 3.

The particular method of maintaining the assembly configuration is not part of this invention and any of the well known means can be utilized including staking with positioning, as shown in Figure 3, with stakes 17 extending either downward from the cap 10 or upward from the seat or combinations thereof. Staking can occur upwardly from the seat, engaging the seat blade 18 and downwardly from the cap 10 engaging the cap blade 19 with the stakes 17 terminating at the opposite blade maintaining the position of the components by upward and downward pressure against these blades.

Other common assembly means can also be used. For example the cap 10 and seat may be formed of resilient fingers acting as leaf springs and this method may be used alone or in conjunction with assorted stakes and detents to maintain relative positioning of the components of the blade assembly ; the particular choice of assembly maintenance means is well known by those skilled in the art.

Figure 2 is illustrative of the relationship between the stakes 17, the tabs 12a, 12b and 12c and the lubricating strip 20. Their position and indicates that, at the place where tab 12c is positioned, in cross section, the tab 12c and projection 16 overlay the lubricating strip 20 as shown therein and are positioned directly above one of the stakes 17 of the staking means.

According to this invention it is preferred that the projection 16 on the back 11 of cap 10 be essentially a solid continuous strip. Shaving itself exerts a backward pressure on the area of projection 16 and the continuous strip offers better resistance than a single tab or a plurality of tabs ; however, other configurations can of course be used but is highly advantageous that they extend essentially along the entire length of the back 11 of cap 10.

In Figure 3 a second embodiment of the cap 10 is shown. Figure 3 does not show the presence of the lubricating strip 20 which is inserted in the central part 25 of the cap 10, but does illustrate the receiving pocket formed by the bosses 14a, 14b and the projections 12 and 16.

Figure 3 shows a continuous front projection 12 is provided positioned along the front portion 13 of the cap 10 and also shows the positioning of the cap face at an angle relative to the plane formed by the bottom of cap sides 15a and 15b. It is currently preferred that the lubricating strip 20 be angled with respect to the cap bottom surface at an angle up to about 30° so that it correlates with contact shaving angle of the blades and the blade assembly. The shaving angle can vary depending upon whether there is a single or multiple blade or whether the razor is designed for maximum or minimum exposure ; these features are well known within the art and are not part of this invention.

The lubricating strip 20 is added to the cap 10 illustrated in Figure 3 by positioning the cap 10 over the pocket formed by bosses 14a and 14b projections 16 and 12 and the central portion 25 of the cap 10 defined by these projections. Once the strip 20 is in place, as illustrated in Figure 1, the projections 16 and 12 regardless of their shape are bent inward toward each other and overlay a portion of the cap 10 thereby serving to retain it. The bosses 14a and 14b could be extended and bent over at the ends. However, because the forces exerted during shaving are not directed along the length of the blade, the bosses 14a and 14b need not be bent but need merely serve as abuttments.

As used herein the expression shaving aid may refer to a solid which is either partially water soluble or substantially entirely water soluble.

The shaving aid may comprise a solid microporous structure having a water soluble material incorporated therein, or a solid micro-encapsulating, water soluble, structure having a water soluble material incorporated therein.

The solid microporous structure may for example be polystyrene, whilst the water soluble material may for example be polyethylene oxide.

The invention can be used with blade assemblies which are in the form of cartridges, or with blade assemblies which form part of a disposable razor.

## Claims

1. A cap (10) for a razor blade assembly (B) comprising a face-engaging surface having front and back edges (13, 11) and having a shaving aid receiving formation on said surface, wherein said shaving aid receiving formation is defined by a deformable back projection (16) disposed substantially parallel to said back edge (11), and a deformable front projection which is formed of a plurality of tabs (12a, 12b, 12c) and which is disposed substantially parallel to the front edge (13) and to the back projection (16), between the front edge (13) and the back projection (16), wherein the front and back projections (12a, 12b, 12c, 16) bend inward toward each other and overlay and inset a shaving aid (20) positioned between the base of said projections, and a boss (14a, 14b) extends upward along the sides (15a, 15b) of the cap (10) substantially normal to the projections to retain the shaving aid (20) from laterally shifting.

2. A cap (10) according to Claim 1, characterised in that said back projection (16) is a continuous and elongated projection.

3. A cap (10) according to Claim 1, characterised in that the back projection (16) is optionally formed of a plurality of tabs and one of the tabs of the front and/or back projection (12a, 12b, 12c, 16) is positioned in the centre of the length of the area of the front projection.

4. A cap (10) according to any preceding claim, characterised in that the cap (10) is provided with a leg (15c, 15d) which is arranged such that it can extend toward a guard bar (22) of the razor blade assembly (B).

5. A cap (10) according to any preceding claim, characterised in that the cap (10) is substantially rectangular and is designed to overlay a rectangular blade (19).

6. A razor blade assembly (B) comprising at least one shaving blade (18, 19), a blade seat, a guard bar (22) extending outward from said seat beyond the or each blade (18, 19) a cap (10) attached to at least said one blade (18, 19) and said seat in a manner which prevent moving the blade (18, 19) from a desired position, wherein said cap (10) comprises a face-engaging surface having front and back edges (13, 11), and having a shaving aid receiving formation on said surface, and wherein said shaving aid receiving formation is defined by a deformable back projection (16) disposed substantially parallel to said back edge (11) and a front deformable projection (12) disposed substantially parallel to the front edge (13) and to the back projection (16), between the front edge (13) and the back projection (16), wherein the front and back projections (12, 16) bend inward towards each other and overlay and inset a shaving aid (20) positioned between the base of said projections (12, 16) and wherein a leg (15c, 15d) extends toward said guard bar (22) at each end of said cap (10).

7. A blade assembly (B) according to Claim 6, characterised in that a cap blade (19) and a seat blade (18) are provided adjacent to the cap (10) and seat respectively, said seat blade (18) extending farther outward toward the guard bar (22) than said cap blade (19), the position of said blades (18,19) being maintained relative to each other.

8. A blade assembly (B) according to Claims 6 or 7 characterised in that a shaving aid (20) is provided which is angled not more than substantially 30° with respect to a cap bottom surface.

9. A blade assembly (B) according to Claims 6, 7 or 8 characterised in that the cap (10) is substantially rectangular and is designed to overlay a rectangular blade (19).

10. A blade assembly (B) according to any of Claims 6 to 9, characterised in that the front projection (12) is elongated and is substantially identical to the back projection (16).

11. A blade assembly (B) according to any of Claims 6 to 9, characterised in that the front projection (12) is formed of a plurality of tabs (12a, 12b, 12c).

## Patentansprüche

1. Abdeckteil (10) für eine Rasierklingeneinheit (B) mit einer Gesichtsanlagefläche, die vordere und hintere Kanten (13, 11) und eine Rasierhilfeaufnahme-Ausformung an dieser Fläche aufweist, wobei die Rasierhilfeaufnahme-Ausformung durch einen im wesentlichen parallel zur hinteren Kante (11) angeordneten verformbaren hinteren Vorsprung (16) und einen verformbaren vorderen Vorsprung festgelegt ist, der aus einer Anzahl von Laschen (12a, 12b, 12c) gebildet und im wesentlichen parallel zur vorderen Kante (13) und zum hinteren Vorsprung (16) zwischen der vorderen Kante (13) und dem hinteren Vorsprung (16) angeordnet ist, wobei die vorderen und hinteren Vorsprünge (12a, 12b, 12c, 16) einwärts aufeinander zu gebogen sind und eine zwischen den Basen der Vorsprünge positionierte Rasierhilfe (20) übergreifen und einziehen, und (je) ein Ansatz (14a, 14b) längs der Seiten (15a, 15b) des Abdeckteils (10) praktisch senkrecht zu den Vorsprüngen nach oben ragt, um die Rasierhilfe (20) gegen eine seitliche Verschiebung festzulegen.

2. Abdeckteil (10) nach Anspruch 1, dadurch gekennzeichnet, daß der hintere Vorsprung (16) ein durchgehender und langgestreckter Vorsprung ist.

3. Abdeckteil (10) nach Anspruch 1, dadurch gekennzeichnet, daß der hintere Vorsprung (16) ggf. aus einer Anzahl von Laschen geformt ist und eine der Laschen von vorderem und/oder hinterem Vorsprung (12a, 12b, 12c, 16) in der Mitte der Länge der Fläche des vorderen Vorsprungs angeordnet ist.

4. Abdeckteil (10) nach einem der vorangehenden Ansprüche, dadurch gekennzeichnet, daß der Abdeckteil (10) mit einem Schenkel (15c, 15d) versehen ist, der so angeordnet ist, daß er sich in Richtung auf eine Schutzleiste (22) der Rasierklingeneinheit (B) erstrecken kann.

5. Abdeckteil (10) nach einem der vorangehenen Ansprüche, dadurch gekennzeichnet, daß der Abdeckteil (10) im wesentlichen rechteckig und für das Übergreifen einer rechteckigen Klinge (19) ausgelegt ist.

6. Rasaierklingeneinheit (B) mit mindestens einer Rasierklinge (18, 19), einem Klingensitz, einer vom Klingensitz sich über die oder jede Klinge (18, 19) hinaus auswärts eratreckenden Schutzleiste (22) und einem an der mindestens einen Klinge (18, 19) und dem Sitz in einer Weise angebrachten Abdeckteil (10), daß eine Verschiebung der Klinge (18, 19) aus einer gewünschten Stellung verhindert wird, wobei der Abdeckteil (10) eine Gesichtsanlagefläche mit vorderen und hinteren Kanten (13, 11) und mit einer Rasierhilfeaufnahme-Ausformung an dieser Fläche aufweist, wobei die Rasierhilfeaufnahme-Ausformung durch einen im wesentlichen parallel zur hinteren Kante (11) angeordneten verfombaren hinteren Vorsprung (16) und einen im wesentlichen parallel zur vorderen Kante (13) und zum hinteren Vorsprung (16) zwischen der vorderen Kante (13) und dem hinteren Vorsprung (16) angeordneten vorderen verformbaren Vorsprung (12) festgelegt ist, wobei vorderer und hinterer Vorsprung (12, 16) einwärts aufeinander zu gebogen sind und eine zwischen den Basen der Vorsprünge (12, 16) positionierte Rasierhilfe (20) übergreifen und einziehen, und wobei ein Schenkel (15c, 15d) sich an jedem Ende des Abdeckteils (10) zur Schutzleiste (22) hin erstreckt.

7. Rasierklingeneinheit (B) nach Anspruch 6, dadurch gekennzeichnet, daß eine Abdeckteil-Klinge (19) und eine Sitz-Klinge (18) am Abdeckteil (10) bzw. am Sitz angeordnet sind, die Sitz-Klinge (18) weiter als die Abdeckteil-Klinge (19) zur Schutzleiste (22) hin nach außen ragt und die Lage der Klingen (18, 19) relativ zueinander aufrechterhalten bzw. festgelegt ist.

8. Rasierklingeneinheit (B) nach Anspruch 6 oder 7, dadurch gekennzeichnet, daß eine Rasierhilfe (20) vorgesehen ist, die unter einem Winkel von praktisch nicht mehr als 30° gegenüber einer Abdeckteil-Bodenfläche geneigt ist.

9. Rasierklingeneinheit (B) nach Anspruch 6, 7 oder 8, dadurch gekennzeichnet, daß der Abdeckteil (10) im wesentlichen rechteckig und für das Übergreifen einer rechteckigen Klinge (19) ausgelegt ist.

10. Rasierklingeneinheit (B) nach einem der Ansprüche 6 bis 9, dadurch gekennzeichnet, daß der vordere Vorsprung (12) langgestreckt und im wesentlichen dem hinteren Vorsprung (16) identisch (gleich ausgebildet) ist.

11. Rasierklingeneinheit (B) nach einem der Ansprüche 6 bis 9, dadurch gekennzeichnet, daß der vordere Vorsprung (12) aus einer Anzahl von Laschen (12a, 12b, 12c) gebildet ist.

**Revendications**

1. Un couvercle (10) pour une cartouche de lames de rasage (B) comprenant une surface de contact avec le visage munie de bords avant et arrière (13, 11) et d'une structure de réception d'un adjuvant de rasage sur ladite surface, dans lequel ladite structure de réception d'adjuvant de rasage est définie par une saillie arrière déformable (16) disposée sensiblement parallèle audit bord arrière (11), et par une saillie avant déformable formée d'une pluralité de pattes (12a, 12b, 12c) et qui est disposée sensiblement parallèle au bord avant (13) et à la saillie arrière (16), entre le bord avant (13) et la saillie arrière (16), dans lequel les saillies avant et arrière (12a, 12b, 12c, 16) s'incurvent vers l'intérieur et l'une vers l'autre en recouvrant et en emboîtant un adjuvant de rasage (20) disposé entre la base desdites saillies, et dans lequel une protubérance (14a, 14b) s'étend vers le haut le long des côtés (15a, 15b) du couvercle (10) de façon sensiblement perpendiculaire aux saillies afin d'empêcher le décalage latéral de l'adjuvant de rasage (20).

2. Un couvercle (10) selon la revendication 1, caractérisé en ce que ladite saillie arrière (16) est une saillie continue et oblongue.

3. Un couvercle (10) selon la revendication 1, caractérisé en ce que la saillie arrière (16) est formée éventuellement d'une pluralité de pattes et l'une des pattes de la saillie avant et/ou arrière (12a, 12b, 12c, 16) est positionnée au milieu de la longueur de la surface de la saillie avant.

4. Un couvercle (10) selon l'une quelconque des revendications précédentes, caractérisé en ce que le couvercle (10) est muni d'un bras (15c, 15d) qui est disposé pour pouvoir s'étendre en direction d'une barrette de protection (22) de la cartouche de lames de rasage (B).

5. Un couvercle (10) selon l'une quelconque des revendications précédentes, caractérisé en ce que le couvercle (10) est sensiblement rectangulaire et est conçu pour recouvrir une lame rectangulaire (19).

6. Une cartouche de lames de rasage (B) comprenant au moins une lame de rasage (18, 19), une embase de lame, une barrette de protection (22) s'étendant vers l'extérieur à partir de ladite embase au-delà de la ou de chaque lame (18, 19), un couvercle (10) fixé au moins à ladite lame (18, 19) et à ladite embase de façon à éviter le déplacement de la lame (18, 19) à partir d'une position souhaitée, dans lequel ledit couvercle (10) comprend une surface de contact avec le visage munie de bords avant et arrière (13, 11), et d'une structure de réception d'adjuvant de rasage sur ladite surface, et dans lequel ladite structure de réception d'adjuvant de rasage est définie par une saillie arrière déformable (16) disposée sensiblement parallèle audit bord arrière (11) et par une saillie avant déformable (12) disposée sensiblement parallèle au bord avant (13) et à la saillie arrière (16), entre le bord avant (13) et la saillie arrière (16), dans lequel les saillies avant et arrière (12, 16) s'incurvent vers l'intérieur et l'une vers l'autre en recouvrant et en emboîtant un adjuvant de rasage (20) disposé entre la base desdites saillies (12, 16) et dans lequel un bras (15c, 15d) s'étend vers ladite barrette de protection (22) à chaque extrémité dudit couvercle (10).

7. Une cartouche de lames (B) selon la revendication 6, caractérisée en ce qu'une lame de couvercle (19) et une lame d'embase (18) sont respectivement adjacentes au couvercle (10) et à l'embase, ladite lame d'embase (18) s'étendant plus loin vers la barrette de protection (22) que ladite lame de couvercle (19), la position relative desdites lames (18, 19) étant maintenue l'une par rapport à l'autre.

8. Une cartouche de lames (B) selon la revendication 6 ou 7, caractérisée en ce qu'elle comporte un adjuvant de rasage (20) qui est incliné d'un angle inférieur ou égal à sensiblement 30° par rapport à une surface inférieure du couvercle.

9. Une cartouche de lames (B) selon la revendication 6, 7 ou 8, caractérisée en ce que le couvercle (10) est sensiblement rectangulaire et est conçu pour recouvrir une lame rectangulaire (19).

10. Une cartouche de lames (B) selon l'une quelconque des revendications 6 à 9, caractérisée en ce que la saillie avant (12) est oblongue et est sensiblement identique à la saillie arrière (16).

11. Une cartouche de lames (B) selon l'une quelconque des revendications 6 à 9, caractérisée en ce que la saillie avant (12) est formée d'une pluralité de pattes (12a, 12b, 12c).

*FIG-1*

*FIG-2*

FIG-3

FIG-4